# EUROPEAN PATENT APPLICATION

(11) **EP 2 933 607 A1**
(43) Date of publication of application: **21.10.2015**
(21) Application number: 15161097.9
(22) Date of filing: 26.03.2015
(51) Int. Cl.: G01C 21/36, G10L 15/00, G06F 17/20

(54) **NAVIGATION SYSTEM HAVING LANGUAGE CATEGORY SELF-ADAPTIVE FUNCTION AND METHOD OF CONTROLLING THE SYSTEM**

(30) Priority: 14.04.2014 CN 201410146906
(71) Applicant: Bosch Automotive Products (Suzhou) Co., Ltd., Jiangsu 215021 (CN)
(72) Inventor: Keshav, Gumaste, 215021 Suzhou, Jiangsu Province (CN)
(74) Representative: Bee, Joachim

(57) **Abstract**

The present invention relates to a navigation system having language category self-adaptive function and a method of controlling the system and pertains to the field of navigation technology. The navigation system at least comprises: a language category recognition unit which recognizes the language category in which a user speaks according to the user's speech input; and a language selection module which selects the language category of navigation information output by the navigation system according to the language category recognized by the language category recognition unit. The navigation information output by the navigation system can achieve language category self-adaptive function and the user can have a good experience.

## Description

### FIELD OF THE INVENTION

The present invention pertains to the field of navigation technology, and relates to a navigation system having language category self-adaptive function and a method of controlling the system.

### BACKGROUND

With continuous development of satellite communication technology, navigation technology has also become more and more advanced in terms of accuracy of positioning, etc., thus providing enormous convenience for people's daily lives. Moreover, with rapid progress in vehicle-mounted electronic system and portable intelligent mobile terminals, navigation system is becoming more and more widespread used.

A navigation system can provide a real-time navigation information service for the destination to be arrived by user, as well additional navigation information service for other sites such as restaurants and entertainment sites nearby the user. The navigation service information can be fed back to the user in the manner of speech broadcast and/or screen display so that the information broadcast by speech (i.e. speech navigation information) and/or the information displayed on a screen (i.e., screen displaying navigation information) is propagated based on a certain language (i.e., language category) which is comfirmed by the navigation system.

EP patent EP2211336A1 discloses a speech recognition unit in a navigation system, which unit can recognize input speech and automatically accomplish input of some texts according to the input speech. The method for recognizing a user's speech input comprises he following steps: detecting the user's speech input, recognizing the user's speech input by comparing the speech input to a list of entries using language model statistics in order to determine the most likely entry best matching the user's speech input, detecting navigation information of a trip to predetermined destination, wherein the most likely entry is determined by modifying the language model statistics taking into account the navigation information.

CN patent application No. 200910082652.3, entitled "Navigation System and Method Having Language Selecting Function", discloses how to automatically identify language category of speech navigation according to the area position at which vehicle is located and so that the language of speech navigation is automatically switched when the vehicle enters another area. CN patent application No. 200610036183.8, entitled "Navigation System and Method For real-time Language Switch", also discloses a similar navigation technology.

CN patent application No. 200910150205.7, entitled "Font Library Expanding Device and Method for Front Entertainment Navigation System of Automobile", discloses a navigation system which has a font library for languages of many nations and which supports navigation information of multiple language categories.

CN patent application No. 201220026165.2, entitled "Language Operating System for Vehicle-mounted information service system using a natural language", discloses a speech operation of a vehicle-mounted information service system using a natural language.

It can be seen from the above navigation systems that existing navigation systems can achieve human-machine interaction between the user and the navigation system based on speech. However, existing navigation systems cannot flexibly switch identified language category according to service object.

### SUMMARY OF THE INVENTION

The object of the invention is to provide a navigation system which automatically switches the language category of navigation information according to the surrounding language environment in which the navigation system is located.

In order to achieve the above or other objects, the invention provides the following technical solution.

According to an aspect of the invention, a navigation system is provided, comprising:
a language category recognition unit which recognizes the language category in which a user speaks according to the user's speech input; and
a language selection module which selects the language category of navigation information output by the navigation system according to the language category recognized by the language category recognition unit.

In the navigation system according to an embodiment of the invention, the language selection module comprises:
a navigation language setting sub-module for setting the number of language categories of navigation information output by the navigation system.

In the navigation system according to another embodiment of the invention, the navigation system further comprises:
a navigation control module connected with the language selection module;
a language database which is connected with the language selection module and provides language information in multiple language categories;
an input module connected with the language control module; and
a navigation information output module connected with the language control module.

In the navigation system according to any of the above embodiments, optionally, the navigation language setting sub-module is configured into a single language category mode or a dual language category mode; in the single language mode, the navigation system outputs navigation information in one language category based on a default language category; and in the dual language category mode, the number of language categories of navigation information output by the navigation system is two, wherein one language category is the default language category, and the other language category is the language category recognized by the language category recognition unit, and the navigation system outputs navigation information service in the two language categories simultaneously.

In the navigation system according to any of the above embodiments, optionally, the navigation system is a vehicle-mounted navigation system and a portable navigation system.

According to another aspect of the invention, a method of controlling a navigation system is provided, comprising the following steps:
recognizing the language category in which a user speaks according to the user's speech input; and
selecting the language category of navigation information output by the navigation system according to the language category recognized.

In the control method according to an embodiment of the invention, the following step is further included:
according to the number N of language categories in which that the user of the navigation system speaks, setting the number of language categories of navigation information output by the navigation system to be N so as to provide the user with navigation information service in N language categories simultaneously, wherein N is an integer larger than or equal to 1.

In the control method according to another embodiment of the invention, the navigation system is provided with a default language category of the navigation information output by the navigation system; if the users' speech input within a predetermined time period that can be set is not recognized in another language category other than the default language category, the navigation system automatically returns to the single language category mode to provide the user with navigation information in the default language category.

Optionally, while the navigation system automatically returns to the single language category mode to provide the user with navigation information in the default language category, the number of language categories of navigation information output by the navigation system is set to be 1.

Optionally, while the navigation system automatically returns to the single language category mode to provide the user with navigation information in the default language category, previously generated navigation information in a language category other than the default language category is automatically removed.

The navigation system and control method thereof according to the invention can not only intelligently recognize a language category that the current user is familiar with by detecting surrounding language environment in which it is located, but can automatically switch language category of navigation information according to the language category information. In this way, a language category self-adaptive function is acquired, and the language category of output navigation information can make an initiative change according to the language category in which the user speaks, thus greatly improving user's experience.

### BRIEF DESCRIPTION OF THE DRAWINGS

The above and other objects and advantages of the invention will become fully understood from the following detailed description with reference to drawings, in which identical or similar elements are denoted by identical reference signs.
Fig. 1 is a schematic view showing the structure of modules of the navigation system according to an embodiment of the invention;
Fig. 2 is a schematic view showing the flowchart of the method of controlling the navigation system according to an embodiment of the invention; and
Fig. 3 is a schematic view showing the flowchart of the method of controlling the navigation system according to another embodiment of the invention.

### DETAILED DESCRIPTION OF THE INVENTION

Some of the many possible embodiments of the invention will be described below in order to provide a basic understanding of the invention and not to identify crucial or decisive elements of the invention or define the scope of protection. It can be easily understood that according to the technical solutions of the invention, those with ordinary skills in the art can propose other alternative implementations without departing from the true spirit of the invention. Therefore, the following embodiments and accompanying drawings are illustrative description of technical solutions of the invention, and should not be construed as constituting the whole of the invention or as limiting or defining technical solutions of the invention.

In the context of the invention, the navigation information can be speech navigation information and/or screen displaying navigation information (e.g., displayed on a touch screen) provided to the users by navigation system.

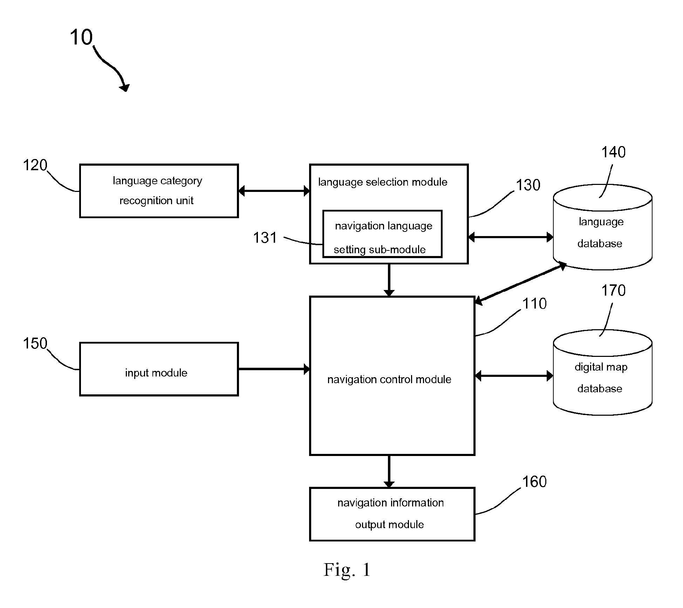

Fig. 1 shows a schematic view showing the structure of modules of the navigation system according to an embodiment of the invention. The navigation system 10 according to the embodiment shown in Fig. 1 can be a vehicle-mounted navigation system, or a portable navigation system. The specific type of the navigation system 10 is not limited to the embodiments of the invention. An example in which the navigation system 10 is a vehicle-mounted navigation system will be described hereinafter in order to conveniently illustrate the principle of achieving language self-adaptive function. However, it should be understood that other types of navigation system can also achieve language self-adaptive function based on a similar principle.

In the vehicle-mounted navigation system, both the driver and/or passengers in the space inside the vehicle can be considered as users of the navigation system 10. The differences between users may lead to a possible change of the languages they are familiar with. The applicant has noted that if the navigation system 10 cannot flexibly provide navigation information in a corresponding language according to the characteristic of user's language, it would be difficult for the user to understand the navigation information output by the navigation system 10.

The applicant has also noted that in CN patent applications No. 200910150205.7, No. 200910082652.3 and No. 201220026165.2, although a navigation system which supports multiple language operation and can achieve automatic switch of language according to the district where the navigation system is located is disclosed, the application of navigation system is generally not limited to the user who is familiar with a certain type of language. In addition, since the world is more widely open and people are getting more closely bonded, more foreign users have entered into China. Such a navigation system which realizes automatic switch of language according to the district where the navigation system is located can not meet navigation service requirements of foreign users at all. For example, when a foreign user, which is studying or working in China and does not know Chinese language well enough, is in a car of his/her Chinese friend, the vehicle-mounted navigation system installed in the car will still provide navigation information service in Chinese. It is obvious that the foreign user will not understand the navigation information service provided by the vehicle-mounted navigation system. If the language of navigation information service needs to be modifies, the language setting of vehicle-mounted navigation system must be accessed manually so as to select a familiar language (in case that the vehicle-mounted navigation system supports a navigation service in multiple languages), thus greatly impairing user's experience.

To this end, as shown in Fig. 1, a language category recognition unit 120 and a language selection module 130 are provided in the navigation system 10. Taking the space inside vehicle as an example, if the user speaks randomly in a certain language, which means that the user is completely familiar with this language, the speech can be input to the language category recognition unit 120. In this way, the language category recognition unit 120 can recognize the spoken language category based on the speech, e.g., English or Chinese. CN patent application No. 201010207237.9, entitled "A modeling Method and Device for Language Category Recognition", discloses a method of recognizing language, which is incorporated herein in its entirety by reference. It should be understood that the specific method of language category recognition is not limited to the embodiments of the invention. In case that more than one users speak two or more languages, all the language categories can be recognized by the language category recognition unit 120.

The one or more language categories in which the users speak recognized by the language category recognition unit 120 is input to the language selection module 130, which selects and determines language information of the corresponding language category from a language database 140 connected thereto according to the recognized language category information, and sends it to a navigation control module 110 of the navigation system 10.

Again, as shown in Fig. 1, the navigation control module 110 is the data processing center of the navigation system 10. The navigation control module 110 may conduct navigation related process according to various instructions input by the user and outputs corresponding navigation information required by the user. The navigation control module 110 can be implemented by various micro processors. Specifically, the navigation system further comprises an input module 150, a navigation information output module 160 and a digital map database 170 which are connected or coupled to the navigation control module 110. The input module 150 and the navigation information output module 160 substantially constitute a HMI (Human Machine Interface) of the navigation system. For example, the HMI generally comprises at least a touch screen, which could be a part of the input module 150, or also a part of the navigation information output module 160. The user can input instructions such as navigation destination via the touch screen. Screen displaying navigation information generated by the navigation control module 110 can also be displayed by the touch screen. In the embodiment of the invention, a human-machine interface can be achieved between the navigation system 10 and the user via speech information. Therefore, the input module 150 is provided with a speech recognition sub-module (not shown) for recognizing speech instructions of the user. The navigation information output module 160 outputs speech navigation information accordingly, thus improving navigation experience of the user.

Upon receipt of navigation related instruction input by the user, the navigation control module 110 accesses a corresponding language category from the language database 140 in conjunction with language category information sent from the language selection module 130 so that the navigation information is generated in the navigation control module 110 based on the corresponding language category. The navigation information of the corresponding language category is sent to the navigation information output module 160 so as to output the navigation information to the user in a language that the user is familiar with. In this way, when the vehicle driver is altered and if the language category that the user is familiar with has also changed, the navigation system 10 can automatically recognize the language category that the user is familiar with according to what the user speaks, and the navigation information output accordingly will also be output automatically in a language category that the driver is familiar with, thus achieving a language category self-adaptive function. This function has a characteristic of automatically switching the language category of navigation information initiatively according to the surrounding language environment in which the navigation system 10 is located, which does not require the user to select the language category of navigation information from the HMI of navigation system, thus not affecting driving operation and greatly improving user's experience.

In a preferred embodiment, preferably, the language selection module 130 is provided therein with a navigation language setting sub-module 131 which can set the number of language categories that the language selection module 130 selects, thus setting the number of language categories of navigation information output by the navigation system. The navigation system 10 is typically provided with a default language category, in which the navigation information service can be provided. In some cases, the user does not want to trigger the language category self-adaptive function of the navigation system 10. For example, considering an example in which Chinese is the default language, if the user is familiar with both Chinese and English, when the user is taking a telephone conversation with another one in English, he does not want to trigger the language category self-adaptive function of the navigation system 10. In such cases, the navigation language setting sub-module 131 sets the number of language categories of navigation information to be 1 through a corresponding menu thereof, thus entering the single language category mode. The language selection module 130 fixes the selected default language category, and the navigation information output module 160 also outputs the navigation information in the default language category.

If there is at least one user whose familiar language category is not the default language category, the navigation language setting sub-module 131 sets the number of language categories of navigation information to be 2 through a corresponding menu thereof, thus entering the dual language category mode. The language selection module 130 selects one of the dual language categories as the default language category, and the other language category is an additional language category recognized by the language category recognition unit 120 and different from the default language category. The navigation information output module 160 outputs the navigation information in both the default language category and the additional language category, thus providing navigation information service in dual language categories simultaneously and meeting navigation requirements of multiple users inside the vehicle.

Of course, the navigation language setting sub-module 131 can also set the number of language categories of navigation information to be 3 or more, thus providing navigation information service in more language categories. However, there might exist the following disadvantage: for example, if navigation information is being broadcast in 3 or more than 3 language categories simultaneously, the environment inside vehicle will be excessively noisy, thus affecting user's experience in other aspects. Therefore, preferably but without limitation, the navigation language setting sub-module 131 sets the number of language categories of navigation information to be 2. It should be understood that if the setting of the navigation language setting sub-module 131 is null, i.e., the number of language categories of navigation information is not set, the navigation information will be output to the user in the language category in which the user speaks recognized by the language category recognition unit 120.

In this embodiment, the above content of speech detected by the language category recognition unit 120 is not limiting, which could be a speech which inputs voice instruction to the input module 150, or also a random conversation between users.

A method of controlling the navigation system 10 according to the embodiment shown in Fig. 1 will be further described hereinafter.

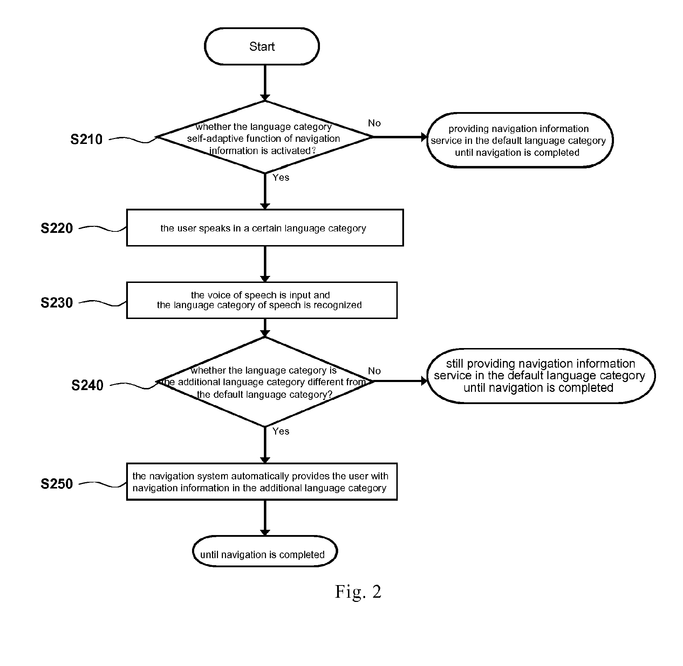

Fig. 2 is a schematic view showing the flowchart of the method of controlling the navigation system according to an embodiment of the invention. The control method according to the embodiment shown in Fig. 2 will be described hereinafter in connection with the navigation system according to the embodiment of Fig. 1.

Firstly, at step S210, it is determined whether the language category self-adaptive function is activated. If it is activated, the means that the language category recognition unit 120 and the language selection module 130 in the navigation system 10 are enabled to enter normal operation mode. If it is determined that the function is not activated, the navigation system 10 will perform navigation operation in an operational principle of conventional navigation system, i.e., providing navigation information service in the default language category until navigation is completed; if it is determined that the function is activated, the process proceeds to step S220.

Next, at step S220, when the user speaks in a certain language category, the speech which the user speaks will be detected by the language category recognition unit 120.

Next, at step S230, the voice of speech is input and the language category in which the user speaks is recognized. That is, the voice of speech is input to the language category recognition unit 120 and the language category recognition unit 120 recognizes the information related language category.

Next, at step S240, it is determined whether the language category is the additional language category which is different from the default language category. If it is determined "no", the navigation information service can still be provided in the default language category until navigation is completed, at which time the language selection module 130 selects the default language category as the language category of navigation information. If it is determined "yes", the process proceeds to step S250.

Next, at step S250, the navigation system automatically provides the user with navigation information in the additional language category. At this time, the language selection module 130 selects the additional language category as the language category of navigation information. The additional language category can be various language categories or multiple language categories different from the default language category, e.g., English, Japanese, Korean and/or German, etc.

In this way, the navigation system 10 can automatically switch language category of navigation information according to the surrounding language environment, i.e., according to what the user speaks, thus flexibly changing the language category of navigation information.

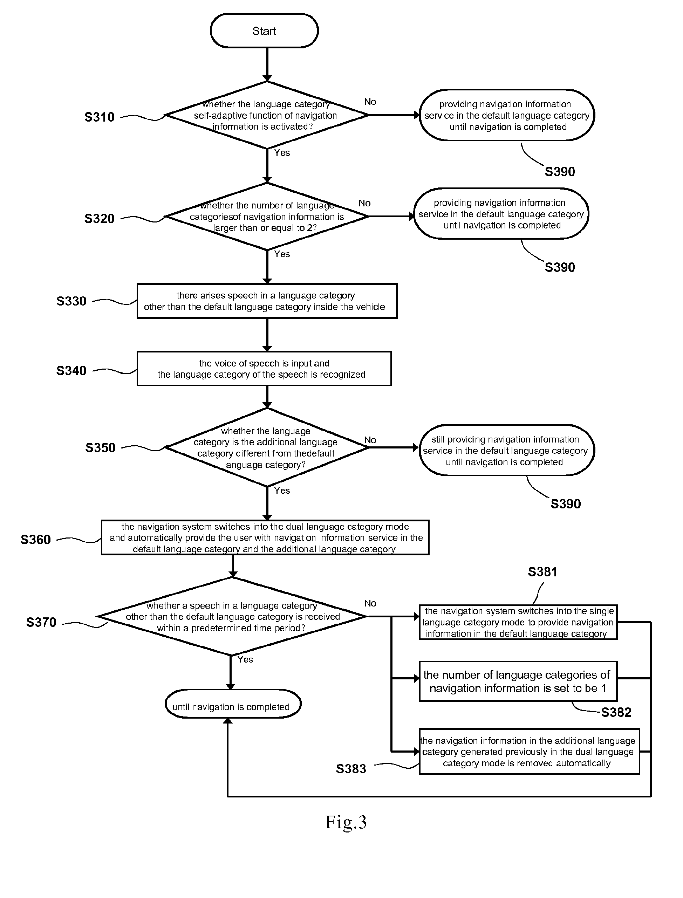

Fig. 3 is a schematic view showing the flowchart of the method of controlling the navigation system according to another embodiment of the invention. In this embodiment, the navigation language setting sub-module 131 in the embodiment shown in Fig. 1 is used to perform navigation control. The control method according to the embodiment shown in Fig. 3 will be described hereinafter with reference to the navigation system according to the embodiment shown in Fig. 1.

Firstly, at step S310, it is determined whether the language category self-adaptive function is activated. At step 390, similar to step S210, if it is determined that the function is not activated, the navigation system 10 will perform navigation operation in an operational principle of conventional navigation system, providing navigation information service in the default language category until navigation is completed (i.e., step 390); if it is determined that the function is activated, the process proceeds to step S320.

Next, at step S320, it is determined whether the number of language categories of navigation information is larger than or equal to 2. If the user sets the number of language categories to be 1 through a corresponding menu of the navigation language setting sub-module 131, it means that the user wants to enter the single language category mode (even if there are passengers who are familiar with different language categories respectively inside the vehicle), and it is not allowed to provide navigation information service in an additional language category other than the default language category, thus entering step S390, in which the navigation system 10 provides navigation information service in the default language category until navigation is completed; if the user sets the number of language categories to be 2 through a corresponding menu of the navigation language setting sub-module 131, it means that the user wants to enter the dual language category mode and it is allowed to provide navigation information service in an additional language category other than the default language category, thus entering step S330.

Next, at step S330, there arises speech in a language category other than the default language category inside the vehicle. At this time, the voice of speech will be detected by the language category recognition unit 120.

Next, at step S340, the voice of speech is input and the language category of the speech is recognized. That is, the voice of speech is input to the language category recognition unit 120 and the language category recognition unit 120 recognizes the information related language category.

Next, at step S350, it is determined whether the language category is the additional language category which is different from the default language category. If it is determined "no", the navigation information service can still be provided in the default language category until navigation is completed, thus entering step S390. If it is determined "yes", the process proceeds to step S360.

Next, at step S360, the navigation system switches into the dual language category mode and automatically provide the user with navigation information service in the default language category and the additional language category. At this time, the language selection module 130 selects the default language category and the additional language category as the language category of navigation information; the navigation system 10 can broadcast speech navigation information in these two language categories simultaneously and/or display screen displaying navigation information simultaneously on a touch screen.

Next, at step S370, it is determined whether a speech in a language category other than the default language category is received within a predetermined time period. At this step, the language category recognition unit 120 still detects the speech of user. If a speech in an additional language category is continuously received within a predetermined time period (e.g., 30 minutes), it means that the user who is familiar with the additional language category is inside the vehicle all the time and the navigation information service in this additional language category needs to be maintained. If no speech in an additional language category is received within a predetermined time period (e.g., 30 minutes), it means that the user who is familiar with the additional language category has left the vehicle and there is no need to provide navigation information service in this additional language category. Then, the process proceeds to step S381 and the navigation system switches into the single language category mode to provide navigation information in the default language category. That is, the navigation system 10 resumes outputting navigation information in the default language category. The length of the predetermined time period is not limiting and can be set by the user accordingly as actually required.

In sync with step S381, the navigation system 10 can automatically set the number of language categories of navigation information to be 1, i.e., step S382; the navigation information in the additional language category generated previously in the dual language category mode is removed automatically, i.e., step S383.

In this way, the process proceeds until navigation is completed. In the control method according to embodiment, it can determined whether to provide navigation information service in two languages according to variation of language environment and the user can determine whether to provide navigation information service in a single language category (i.e., the default language category) fixedly as actually required. Providing navigation information service in two languages simultaneously (i.e., outputting navigation information in two languages) is also beneficial for avoiding frequent switch of the language category of navigation information caused by random change of the language category in which the user speaks; moreover, unnecessary navigation information service in the additional language category can be automatically terminated by automatically detecting variation of language environment.

In the control method according to the embodiment show in Fig. 3, the additional language category can be a language category different from the default language category, e.g., English, Japanese, Korean or German, etc

The application of language category self-adaptive function of the navigation system 10 according to the embodiment shown in Fig. 1 will be described hereinafter by way of example so that the technical effects of the navigation system and control method of the invention will become more easily understood.

If a foreigner who is only familiar with English is on a business trip in China or lives in China, when he sits in the car of his Chinese friend, the default language category of the navigation system 10 of the car is Chinese. Therefore, when navigation system 10 is in operation, the speech navigation information is provided in Chinese. At this time, the foreigner cannot understand the Chinese navigation information. If the foreigner starts to talk to his Chinese friend in English, the navigation system 10 will automatically learn that the language category in which the foreigner speaks is English and automatically switches to provide speech navigation information in English. Thus, for the foreigner, the experience in navigation information service will be greatly improved. If the Chinese friend wants the navigation system 10 to provide navigation information service in two language categories simultaneously, the number of language categories of navigation information can be set to be 2 in a corresponding menu of the navigation language setting sub-module 131 and the navigation system 10 will provide speech navigation information in both Chinese and English.

After the foreigner leaves the car, the navigation system 10 can recognize that the Chinese friend is speaking in Chinese and automatically resumes providing speech navigation in a single Chinese language; of course, it is also possible that if the navigation system 10 does not recognize any English speech within the predetermined 30 minutes, the navigation system 10 automatically returns to the single language category mode to provide the user with speech navigation information in default Chinese language.

It will be understood that when a component is described as being "connected to" or "coupled to" another component, it could be directly connected to or coupled to the other component or there could exist an intermediate component.

The above embodiments mainly describe the navigation system and control method of the invention. Although only some of the embodiments of the invention have been described, it is understood by those with ordinary skills in the art that the invention can be implemented in many other forms without departing the spirit and scope of the invention. For example, the language category recognition unit 120 can be implemented by configuring it in the input module 150 of the navigation system; alternatively, the language selection module 130 can be implemented by configuring it in the navigation control module 110. It is also possible that the step S382 is not executed while the step S381 is being executed. Therefore, the illustrated examples and embodiments should be construed as being exemplary rather than limiting, and the invention can compass various modifications and alternatives without departing the spirit and scope of the invention as defined by appended claims.

## Claims

1. A navigation system (10), **characterized by** comprising:
a language category recognition unit (120) which recognizes the language category in which a user speaks according to the user's speech input; and
a language selection module (130) which selects the language category of navigation information output by the navigation system according to the language category recognized by the language category recognition unit (120).

2. The navigation system (10) according to claim 1, **characterized in that** the language selection module (130) comprises:
a navigation language setting sub-module (131) for setting the number of language categories of navigation information output by the navigation system (10).

3. The navigation system (10) according to claim 1 or 2, **characterized in that** the navigation system (10) further comprises:
a navigation control module (110) connected with the language selection module (130);
a language database (140) which is connected with the language selection module (130) and provides language information in multiple language categories;
an input module (150) connected with the language control module (110); and
a navigation information output module (160) connected with the language control module (110).

4. The navigation system (10) according to claim 2, **characterized in that** the navigation language setting sub-module (131) is configured into a single language category mode or a dual language category mode; in the single language category mode, the navigation system (10) outputs navigation information in one language category based on a default language category; and in the dual language category mode, the number of language categories of navigation information output by the navigation system (10) is two, wherein one language category is the default language category, and the other language category is the language category recognized by the language category recognition unit (120), and the navigation system outputs navigation information service in the two language categories simultaneously.

5. The navigation system (10) according to claim 1 or 2, **characterized in that** the navigation system is a vehicle-mounted navigation system and a portable navigation system.

6. A method of controlling a navigation system (10), **characterized by** comprising the following steps:
recognizing the language category in which a user speaks according to the user's speech input; and
selecting the language category of navigation information output by the navigation system (10) according to the language category recognized.

7. The control method according to claim 6, **characterized by** comprising the step of:
according to the number N of language categories in which that the user of the navigation system (10) speaks, setting the number of language categories of navigation information output by the navigation system (10) to be N so as to provide the user with navigation information service in N language categories simultaneously, wherein N is an integer larger than or equal to 1.

8. The control method according to claim 6 or 7, **characterized in that** the navigation system (10) is provided with a default language category of the navigation information output by the navigation system (10); if the users' speech input within a predetermined time period that can be set is not recognized in another language category other than the default language category, the navigation system automatically returns to the single language category mode to provide the user with navigation information in the default language category.

9. The control method according to claim 8, **characterized in that** while the navigation system automatically returns to the single language category mode to provide the user with navigation information in the default language category, the number of language categories of navigation information output by the navigation system (10) is set to be 1.

10. The control method according to claim 8, **characterized in that** while the navigation system automatically returns to the single language category mode to provide the user with navigation information in the default language category, previously generated navigation information in a language category other than the default language category is automatically removed.
